(19) Europäisches Patentamt
European Patent Office
Office européen des brevets

(11) EP 4 621 868 A1

(12) EUROPEAN PATENT APPLICATION
published in accordance with Art. 153(4) EPC

(43) Date of publication:
**24.09.2025 Bulletin 2025/39**

(21) Application number: **23912442.3**

(22) Date of filing: **07.09.2023**

(51) International Patent Classification (IPC):
***H01M 4/134*** *(2010.01)* ***H01M 4/62*** *(2006.01)*
***H01M 4/1395*** *(2010.01)* ***H01M 10/42*** *(2006.01)*
***H01M 10/052*** *(2010.01)* ***H01M 4/38*** *(2006.01)*
***H01M 4/02*** *(2006.01)*

(52) Cooperative Patent Classification (CPC):
**H01M 4/02; H01M 4/134; H01M 4/1395; H01M 4/38; H01M 4/62; H01M 10/052; H01M 10/42;** Y02E 60/10

(86) International application number:
**PCT/KR2023/013384**

(87) International publication number:
**WO 2024/143758 (04.07.2024 Gazette 2024/27)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.12.2022 KR 20220185566**

(71) Applicant: **SK On Co., Ltd.**
**Seoul 03161 (KR)**

(72) Inventors:
- **YOON, Na-Eun**
**Daejeon 34124 (KR)**
- **SONG, Ju-Hye**
**Daejeon 34124 (KR)**

(74) Representative: **Prüfer & Partner mbB**
**Patentanwälte · Rechtsanwälte**
**Sohnckestraße 12**
**81479 München (DE)**

# (54) LITHIUM METAL ANODE, METHOD FOR MANUFACTURING SAME, AND LITHIUM METAL BATTERY INCLUDING SAME

(57) A lithium metal anode according to an embodiment of the present invention comprises: a lithium metal layer; and a protective layer formed on at least one surface of the lithium metal layer, wherein the protective layer contains lithiophilic inorganic particles, and an FT-IR spectrum of the protective layer has at least one peak in the region of 1750-1880 $cm^{-1}$. The lithium metal anode has excellent ionic conductivity and mechanical strength and includes a protective layer that can induce uniform lithium deposition behavior, thus being able to effectively inhibit the growth of lithium dendrites. Accordingly, a lithium metal battery having excellent cycle life, capacity characteristics, safety, etc. during deposition/dissolution can be provided.

[FIG.2]

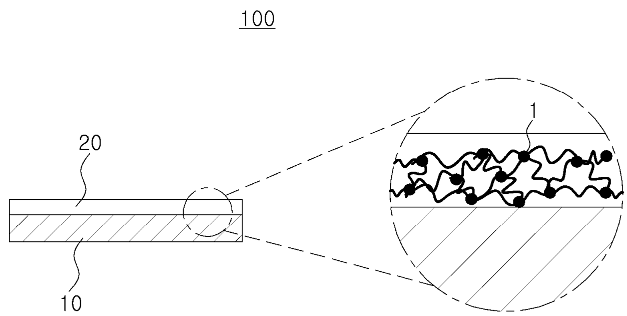


EP 4 621 868 A1

## Description

Technical Field

The present disclosure relates to a lithium metal anode, a method for manufacturing the same, and a lithium metal battery including the same.

Background Art

Interest in electric vehicles (EVs) that may replace fossil fuel-based vehicles, one of the main causes of air pollution, is continuously increasing, and lithium secondary batteries, which are mainly used as the power source for electric vehicles (EVs) due to their high charging voltage and output stability, are being actively developed.

Meanwhile, lithium metal, having a relatively high capacity (3860 mAh/g) and low redox potential (-3.04 V vs. SHE), has recently been attracting attention as a promising anode material, and research into lithium metal batteries including such lithium metal anodes (LMA) is also being conducted.

However, when lithium metal is applied as an anode, it is difficult to secure the cycle characteristics and stability of the battery due to problems such as (1) low Coulombic efficiency during charging/discharging caused by the high reactivity of lithium metal to electrolyte, (2) a lithium dendritic growth, in other words, lithium dendrite formation, and the like, and accordingly, technology to effectively control this is required.

Disclosure of Invention

Technical Problem

An aspect of the present disclosure is to provide a lithium metal anode in which electrochemical performance, efficiency, safety, and the like of a battery may be effectively improved by inducing uniform lithium electrodeposition and suppressing growth of lithium dendrites.

Another aspect of the present disclosure is to provide a lithium metal battery having excellent electrochemical performance, lifespan characteristics, safety, and the like.

Solution to Problem

According to an aspect of the present disclosure, a lithium metal anode includes a lithium metal layer; and a protective layer formed on at least one surface of the lithium metal layer, wherein the protective layer includes lithiophilic inorganic particles, and at least one peak appears in a region of 1750 to 1880 $cm^{-1}$ when analyzing the protective layer using FT-IR.

The protective layer may include an organic/inorganic composite polymer.

The organic/inorganic composite polymer may have a structure in which chemical bonds are formed between lithiophilic inorganic particles and are three-dimensionally connected to each other.

During FT-IR analysis of the protective layer, at least one peak may respectively appear in the region of 1750 to 1800 $cm^{-1}$ and a region of 1820 to 1880 $cm^{-1}$.

A peak area ratio value according to the following formula 1 may be greater than 1 during the FT-IR analysis of the protective layer.

[Formula 1]

$$R_P = I/A$$

In the above formula 1, $R_P$ is a peak area ratio, A is an area of a peak area appearing in a region of 1680 to 1750 $cm^{-1}$, and I is a total area of each peak area appearing in the region of 1750 to 1800 $cm^{-1}$ and the region of 1820 to 1880 $cm^{-1}$.

The protective layer may include at least one of LiF and $Li_3N$.

The lithiophilic inorganic particles may include a metal, a metal oxide, a metal nitride, or combinations thereof.

The lithiophilic inorganic particles may include Au, Ag, Pt, Al, Mg, Zn, Ni, Se, Te, Bi, Pb, Ga, Cd, Hg, Pd, Sc, Y, Ca, Sr, Ba, NiO, ZnO, SnO, $Cu_xO$(where x is 1 or 2), GeO, $Ag_xO$(where x is 1 or 2), $Sb_2O_y$(where y is 3, 4 or 5), CuZn or combinations thereof.

A diameter of the lithiophilic inorganic particles may be less than 500 nm.

A thickness of the protective layer may be 0.1 to 20 μm.

According to an aspect of the present disclosure, a method for manufacturing a lithium metal anode includes an operation S1 of modifying lithiophilic inorganic particles to have amino groups on surfaces thereof; an operation S2 of producing an organic/inorganic composite polymer by imidizing the modified lithiophilic inorganic particles and dianhydride; and an operation S3 of forming a protective layer on at least one surface of a lithium metal layer with a composition including the organic/inorganic composite polymer.
The operation S1 may include a process of dispersing lithiophilic inorganic particles in an organic solution.
The organic solution may include a compound represented by the following chemical formula 1.

[Chemical Formula 1] $H_2N - R^1 - SH$

In chemical formula 1, $R^1$ is at least one organic group selected from an alkylene group, an arylene group, a heterocyclic group, and an alkylene oxide group, which may be substituted.
The organic solution may include 1 to 20 mol/L of the compound represented by chemical formula 1.
The dianhydride may include a fluorine element.
According to an aspect of the present disclosure, a lithium metal battery includes the lithium metal anode according to any one of the above-described embodiments.

## Advantageous Effects of Invention

According to an embodiment, a lithium metal anode having excellent ion conductivity and mechanical strength and including a protective layer capable of inducing uniform lithium electrodeposition behavior may be provided, which may effectively suppress the growth of lithium dendrites.
According to another embodiment, a lithium metal battery having excellent cycle lifespan, capacity characteristics and safety, and the like, during charging/discharging, may be provided.

## Brief Description of Drawings

FIGS. 1A to 1B are drawings illustrating a method for forming an organic/inorganic composite polymer according to an embodiment, stepwise, sequentially.
FIG. 2 is a drawing illustrating a conceptual cross-section of a lithium metal anode according to an embodiment.
FIG. 3 is a drawing illustrating a method for manufacturing a lithium metal anode according to an embodiment, stepwise, sequentially.
FIGS. 4A to 4C are drawings illustrating the results of FT-IR analysis of lithium metal anodes according to examples and comparative examples.
FIG. 5 is a drawing illustrating the results of evaluation of electrodeposition/stripping characteristics of a lithium metal battery including a lithium metal anode according to examples and comparative examples.

## Best Mode for Invention

Hereinafter, a preferred embodiment will be described with reference to various examples. However, the embodiment is not limited to the implementation examples described below, and may be modified in various other forms.
Hereinafter, unless otherwise specifically defined, when a part such as a layer, film, thin film, region, plate or the like is said to be "on" or "above" another part, this may include not only the case where it is "directly on" another part, but also the case where there is another part therebetween.
Hereinafter, unless otherwise specifically defined, "a combination thereof" may mean a mixture or copolymerization of the components defined prior thereto. In addition, "a combination thereof" may mean that two or more of the components defined prior thereto may be used or provided together.
In this specification, "polymer" means a relatively high molecular weight molecule, and the structure of the "polymer" may be a structure in which a unit derived from a low molecular weight monomer is repeated multiple times. The 'polymer' includes an organic polymer composed of an organic substance, an inorganic polymer composed of an inorganic substance, an organic/inorganic composite polymer including an organic substance and an inorganic substance, or combinations thereof, and may include not only a polymer composed of the same monomer but also a copolymer thereof. In addition, the copolymer may include an alternating copolymer, a block copolymer, a random copolymer, a branched copolymer, a crosslinked copolymer, or combinations thereof.
In this specification, the 'organic/inorganic composite polymer' means a polymer in which a chemical bond is formed between inorganic particles by reacting monomers including inorganic particles with each other or by reacting

monomers including inorganic particles with another compound. Specifically, the 'organic/inorganic composite polymer' may mean a polymer having a structure in which the inorganic particles are three-dimensionally connected to each other, and specifically, a polymer having a network structure in which the inorganic particles are three-dimensionally cross-linked and connected to each other.

As described above, research is being conducted on applying lithium metal with relatively high capacity and low redox potential characteristics as an anode, but it is difficult to secure cycle characteristics and stability of the battery due to problems such as lithium dendrite formation or the like.

A lithium metal anode according to an embodiment may substantially solve the above problems by including a protective layer that may effectively suppress the growth of lithium dendrite by inducing uniform lithium electrodeposition behavior on at least one surface of a lithium metal layer, and may contribute to providing a lithium metal battery having excellent ion conductivity, cycle lifespan, capacity characteristics, safety, and the like. With reference to FIGS. 1A to 5, details are provided below.

FIGS. 1A to 1B are drawings illustrating a method for forming an organic/inorganic composite polymer according to an embodiment step-by-step sequentially.

FIG. 2 is a drawing conceptually illustrating a cross-section of a lithium metal anode according to an embodiment.

FIG. 3 is a drawing illustrating a method for manufacturing a lithium metal anode according to an embodiment in sequence.

FIGS. 4A to 4C are drawings illustrating the results of FT-IR analysis for lithium metal anodes according to examples and comparative examples.

FIG. 5 is a drawing illustrating the results of evaluation of electrodeposition/stripping characteristics for lithium metal batteries including lithium metal anodes according to examples and comparative examples.

## Lithium Metal Anode

A lithium metal anode (100) according to an embodiment includes a lithium metal layer (10); and a protective layer (20) formed on at least one surface of the lithium metal layer, and the protective layer includes lithiophilic inorganic particles (1), and at least one peak appears in the region of 1750 to 1880 $cm^{-1}$ during FT-IR analysis of the protective layer (20).

As described above, the protective layer (20) may effectively suppress the growth of lithium dendrites by inducing uniform lithium electrodeposition behavior on at least one surface of the lithium metal layer (10).

The protective layer (20) includes lithiophilic inorganic particles (1). In this case, lithiophilic means having an affinity for lithium, and in the case in which lithium is present together with a substance having a low affinity for lithium, the lithium metal is selectively electrodeposited first. On the other hand, lithium-affinity materials having high affinity for lithium may lower the initial nucleation resistance of the lithium electrodeposition reaction, thereby inducing uniform electrodeposition of lithium metal and thus inhibiting the growth of lithium dendrites. Therefore, the lithiophilic inorganic particles (1) may induce uniform electrodeposition of lithium metal, and may improve the stability and cell performance of lithium metal batteries by inhibiting the growth of lithium dendrites.

The lithiophilic inorganic particles (1) refer to particles containing lithio-philic inorganic substances, and the lithiophilic inorganic particles (1) may include a metal, a metal oxide, a metal nitride, or combinations thereof. For example, the lithiophilic inorganic particles may include Au, Ag, Pt, Al, Mg, Zn, Ni, Se, Te, Bi, Pb, Ga, Cd, Hg, Pd, Sc, Y, Ca, Sr, Ba, NiO, ZnO, SnO, $Cu_xO$(x is 1 or 2), GeO, $Ag_xO$(x is 1 or 2), $Sb_2O_y$(y is 3, 4 or 5), CuZn, or combinations thereof. In addition, the lithiophilic inorganic particles may be substantially composed only of the lithio-philic inorganic material described above.

As described above, such lithio-philic inorganic material may electrochemically react with lithium and induce uniform electrodeposition behavior of lithium ions. Accordingly, when the protective layer (20) including the lithiophilic inorganic particles (1) is formed on at least one surface of the lithium metal layer (10), the growth of lithium dendrites during the battery charge/discharge process may be suppressed, effectively preventing problems such as a decrease in irreversible capacity, an internal short circuit in the battery, and the like.

In an embodiment, the lithiophilic inorganic particles (1) may include Ag, $Ag_xO$(x is 1 or 2), or combinations thereof. Specifically, the lithiophilic inorganic particles (1) may be silver nanoparticles (AgNPs) including silver (Ag). When the lithiophilic inorganic particles (1) include silver (Ag), it may be advantageous in forming an alloy with lithium to generate initial lithium nuclei, and may more effectively reduce lithium electrodeposition resistance.

The diameter of the lithiophilic inorganic particles (1) may be less than 500 nm. Specifically, the diameter of the lithiophilic inorganic particles (1) may be 0.1 nm or more, 1 nm or more, 10 nm or more, or 20 nm or more, and may be 400 nm or less or 300 nm or less. If the size of the lithiophilic inorganic particles (1) is too small, the specific surface area may decrease, which may make it difficult to polymerize between functional groups on the surface of the inorganic particles in the particle surface modification operation described below. Therefore, when the lithiophilic inorganic particles (1) are nanoparticles having a diameter within the above-described range, the dispersibility is excellent, so that functional groups may be appropriately formed on the surface of the inorganic particles in the particle surface modification operation

described below, and the imidization reaction due to polymerization between the functional groups may easily proceed.

The protective layer (20) may include an organic/inorganic composite polymer, and the organic/inorganic composite polymer may have a structure in which chemical bonds are formed between lithiophilic inorganic particles (1) and are connected three-dimensionally. When the protective layer includes the organic/inorganic composite polymer as above, the lithiophilic inorganic particles (1) may exist in the protective layer (20) as a network structure in which the particles are cross-linked and connected three-dimensionally through organic chemical bonds. The structure of the organic/inorganic composite polymer is distinguishable from the structure of a mixture in which a separate organic polymer having the above-described chemical bonds and lithiophilic inorganic particles are physically mixed, and specifically, it may be distinguishable from whether the lithiophilic inorganic particles are connected to each other three-dimensionally through chemical bonds.

The chemical bond formed between the lithiophilic inorganic particles (1) may be an imide bond. Specifically, the lithiophilic inorganic particles (1) may exist within the protective layer (20) by forming a compound (PI) having an imide bond between the particles through an amino group, which is a functional group formed on the particle surface (see FIG. 1B and FIG. 2) and in the structure that they are cross-linked and connected to each other, and accordingly, a peak indicating an imide bond may appear during infrared analysis (IR) of the protective layer (20).

In general, when at least one peak appears in the region of 1750 to 1880 $cm^{-1}$ during FT-IR analysis using a Fourier transform infrared (FT-IR) spectrometer, specifically, at least one peak respectively appears in the region of 1750 to 1800 $cm^{-1}$ and the region of 1820 to 1880 $cm^{-1}$, it means that an imide bond exists within a specific material. Accordingly, when performing FT-IR analysis on the protective layer (20), at least one peak appears in the region of 1750 to 1880 $cm^{-1}$, and specifically, at least one peak may appear in each of the region of 1750 to 1800 $cm^{-1}$ and the region of 1820 to 1880 $cm^{-1}$. In this case, the 'region of - $cm^{-1}$' refers to a region distinguished by absorbance according to wavenumbers during FT-IR analysis.

When performing FT-IR analysis on the protective layer (20), the peak area ratio value according to the following formula 1 may exceed 1.

[Formula 1]

$$R_P = I/A$$

In the above formula 1, $R_P$ is a peak area ratio, A is an area of a peak area appearing in the region of 1680 to 1750 $cm^{-1}$, and I is a total area of each peak area appearing in the region of 1750 to 1800 $cm^{-1}$ and the region of 1820 to 1880 $cm^{-1}$.

Specifically, when analyzing the protective layer (20) through FT-IR, the peak area ratio value according to the formula 1 may be 1.1 or more, 3 or more, 6 or more, or 8 or more, and may be less than 30, 20 or less, or 15 or less.

In the above formula 1, $R_P$ means the ratio of the area (I) of the Imide C=O peak area to the area (A) of the Acid C=O peak area that appears during FT-IR analysis, A means the area of the peak area at 1680 to 1750 $cm^{-1}$ where the Acid C=O peak appears, and I means the total area of each peak area in the region of 1750 to 1800 $cm^{-1}$ and the region of 1820 to 1880 $cm^{-1}$ where the Imide C=O peak appears. In this case, the area of the peak area may be calculated by measuring the infrared absorption rate in the wavenumber domain where the peak appears by the FT-IR device and integrating the area of each peak using the OriginPro 2021b program. For example, the area (A) of the Acid C=O peak area may be calculated by integrating the area derived by fitting the peak corresponding to wavenumbers of 1680 to 1750 $cm^{-1}$ to a Gaussian curve after deriving the baseline using the 2nd derivative method.

In the present specification, when the FT-IR analysis of the protective layer (20) shows at least one peak in each of the region of 1750 to 1800 $cm^{-1}$ and the region of 1820 to 1880 $cm^{-1}$, and the peak area ratio characteristics according to the above formula 1 are as described above, it may be determined that the protective layer includes an organic/inorganic composite polymer having a structure in which chemical bonds are formed between lithiophilic inorganic particles (1) and are three-dimensionally connected to each other. Since the lithiophilic inorganic particles (1) included in the protective layer (20) of the lithium metal anode (100) exist in a three-dimensional structure in which they are cross-linked and connected to each other through organic bonding, the mechanical/electrochemical performance, charge/discharge characteristics, and the like of the lithium metal anode may be very excellent.

According to an embodiment, when analyzing the FT-IR for the protective layer (20), the imide peak area ratio value according to the following formula 2 may be greater than 1.

[Formula 2]

$$R_I = I_1/I_2$$

In the formula 2 above, $R_I$ is the imide peak area ratio, $I_1$ is the area of the peak area appearing in the region of

1750 to 1800 $cm^{-1}$, and $I_2$ is the area of the peak area appearing in the region of 1820 to 1880 $cm^{-1}$.

Specifically, when analyzing the FT-IR for the protective layer (20), the imide peak area ratio value according to the formula 2 above may be 2 or more or 2.5 or more, and may be 10 or less or 5 or less.

When the FT-IR analysis of the protective layer (20) shows that the imide peak area ratio characteristics according to the above formula 2 are as described above, the structure of the organic/inorganic composite polymer included in the protective layer is formed more excellently, which may further improve the performance of the lithium metal anode.

The protective layer (20) may include one or more materials among LiF and $Li_3N$. The lithium fluoride (LiF) and lithium nitride ($Li_3N$) are inorganic compounds that may be formed by the fluorine element and nitrogen element in the protective layer (20) reacting with lithium ions during the battery charge/discharge process, and may further improve the uniform electrodeposition characteristics of the lithium metal, mechanical strength, and the like during the battery charging/discharging. When the protective layer (20) includes one or more materials among LiF and $Li_3N$, the mechanical strength, lifespan characteristics, electrochemical performance, ion conduction performance, and the like of the lithium metal anode (100) may further be improved.

The thickness of the protective layer (20) may be 0.1 to 20 $\mu$m. Specifically, the thickness of the protective layer (20) may be 1 $\mu$m or more, and may be 10 $\mu$m or less, or 2 $\mu$m or less. When the thickness of the protective layer (20) is within the above-described range, both the mechanical strength and the electrochemical performance of the lithium metal anode may be excellently improved.

The lithium metal anode (100) may be manufactured by a method for manufacturing an anode described below.

## Method for Manufacturing Anode

A method for manufacturing a lithium metal anode (100) according to an embodiment includes an operation S1 of modifying lithiophilic inorganic particles (1) to have amino groups on surfaces; an operation S2 of producing an organic/inorganic composite polymer by imidizing the modified lithiophilic inorganic particles and dianhydride; and an operation S3 of forming a protective layer (20) on at least one surface of a lithium metal layer (10) with a composition including the organic/inorganic composite polymer.

The method for manufacturing the lithium metal anode (100) includes an operation S1 of modifying the lithiophilic inorganic particles (1) to have 1 or more amino groups as functional groups on the surface so that the lithiophilic inorganic particles (1) included in the protective layer (20) formed on at least one surface of the lithium metal layer (10) form an imide bond between the particles and thus exist in the protective layer (20) in a cross-linked structure.

The operation S1 may include a process of dispersing the lithiophilic inorganic particles (1) in an organic solution, and the organic solution may include a compound represented by the following chemical formula 1.

[Chemical Formula 1] $H_2N - R^1 - SH$

In chemical formula 1, $R^1$ is at least one organic group selected from an alkylene group, an arylene group, a heterocyclic group, and an alkylene oxide group that may be substituted.

The carbon number of the alkylene group is not particularly limited. For example, the alkylene group may be an alkylene group having 1 to 20 carbon atoms, 1 to 15 carbon atoms, 1 to 10 carbon atoms, 1 to 6 carbon atoms, or 1 to 4 carbon atoms, and when the alkylene group is an alkylene group having 2 carbon atoms, the compound represented by chemical formula 1 may correspond to 2-aminoethanethiol.

The arylene group refers to a monovalent residue or a divalent residue derived from an aromatic compound or a derivative thereof, including a benzene ring or a structure in which two or more benzene rings are condensed or bonded while sharing two or one carbon atom. The arylene group may be arbitrarily substituted by one or more substituents, and the carbon number thereof is not particularly limited, but may be an arylene group having 6 to 30 carbon atoms, 6 to 25 carbon atoms, 6 to 22 carbon atoms, 6 to 18 carbon atoms, 6 to 14 carbon atoms, or 6 to 12 carbon atoms.

For example, the arylene group may be a phenyl group, a naphthyl group, an anthracenyl group, a phenanthryl group, a pyrenyl group, a perylenyl group, a chrysenyl group, a fluorenyl group, or combinations thereof, and when the arylene group is a phenyl group having 6 carbon atoms, the compound represented by chemical formula 1 may be 2-aminobenzenethiol or 4-aminobenzenethiol.

The heterocyclic group means a ring containing 1 or more heteroatoms other than carbon, and the heteroatoms may be, for example, O, N, Se, S, or the like. The heterocyclic group may be optionally substituted by one or more substituents, and the carbon number thereof is not particularly limited, but may be a heterocyclic group having 2 to 60 carbon atoms.

For example, the heterocyclic group may be a pyridyl group, a pyridine-N-oxide group, a pyrimidinyl group, a pyridazyl group, a furyl group, a tetrahydrofuryl group, a thienyl group, a tetrahydrothienyl group, a tetrahydropyranyl group, an oxazolyl group, an isoxazolyl group, an oxadiazolyl group, a thiazolyl group, an isothiazolyl group, a thiadiazolyl

group, a pyrrole group, an imidazolyl group, a triazolyl group, a pyrazolyl group, a tetrazolyl group, or combinations thereof.

The alkylene oxide group may be optionally substituted by one or more substituents, and the carbon number thereof is not particularly limited. For example, the alkylene oxide group may be an alkylene oxide group having 2 to 20 carbon atoms, such as ethylene oxide, propylene oxide, or the like.

The compound represented by chemical formula 1 is a compound having a thiol group and an amino group at both terminals, and specifically, in chemical formula 1 above, $R^1$ may be a compound that is an alkylene group, and more specifically, may be 2-aminoethanethiol. When dispersing lithiophilic inorganic particles (1) with an organic solution containing the compound described above, the lithiophilic inorganic particles (1) may be modified to easily form a structure in which a thiol group is attached to the particle surface and an amino group exists at the outermost shell (see FIG. 1A).

The organic solution may contain 1 to 20 mol/L of the compound represented by chemical formula 1. Specifically, the organic solution may contain 5 to 15 mol/L of the compound represented by chemical formula 1. If the concentration of the compound represented by chemical formula 1 is too low, it may be difficult to form amino groups on the surface of the lithium-affinity inorganic particles, and if the concentration is too high, it may be difficult to uniformly disperse the lithium-affinity inorganic particles in the solution. Therefore, when the organic solution contains the compound represented by chemical formula 1 within the above-described range, amino groups may be excellently formed on the surface of the lithium-affinity inorganic particles without problems such as dispersibility and the like in the solution.

The organic solution may further contain a commonly used organic solvent. For example, the organic solution may contain tetrahydrofuran (THF) as the organic solvent, but its type is not particularly limited. The organic solution may disperse the compound represented by chemical formula 1 with such an organic solvent.

The operation S1 may further include an operation of stirring an organic solution in which the lithiophilic inorganic particles (1) are dispersed; an operation of filtering the stirred organic solution; and an operation of drying the filtrate. The operation of stirring the organic solution may be performed for 1 to 5 hours, the operation of filtering the organic solution may be performed by washing the solid with an organic solvent such as tetrahydrofuran (THF) or the like, and the operation of drying the filtrate may be performed at room temperature for 12 to 48 hours.

The method for manufacturing the lithium metal anode (100) includes an operation S2 of producing a polymer by imidizing the lithiophilic inorganic particles modified in the operation S1 with dianhydride. Specifically, the imidization reaction may be performed by an operation of reacting an amino group formed on the surface of the modified lithiophilic inorganic particles with dianhydride to form a polyamic acid (PAA); and an operation of heat-treating the polyamic acid to form an imide bond.

The operation of forming the polyamic acid may be performed by adding dianhydride to a solution in which modified lithiophilic inorganic particles are dispersed in an organic solvent such as diethylformamide (DEF) or the like, and stirring the solution. At this time, the stirring process may be performed at room temperature for 12 to 48 hours.

In the operation S2, the weight ratio of the modified lithiophilic inorganic particles and dianhydride may be 1:50 to 1:200. If the content of the modified lithiophilic inorganic particles is too large, the polymerization degree of the polymer may be low, and if the content of the dianhydride is too large, the polymer may have a low polymerization degree and problems may occur due to the presence of unreacted materials. Therefore, when the weight ratio of the modified lithiophilic inorganic particles and dianhydride is appropriately adjusted within the above-described range, the polymer may be formed so that substantially no unreacted materials remain, and a polyimide polymer with a polymerization degree adjusted to an appropriate level or higher may be obtained.

The dianhydride may contain a fluorine element. For example, the dianhydride may be 4,4'-(hexafluoroisopropylidene)diphthalic anhydride (6FDA), 2,2'-Bis(trifluoromethyl)benzidine (TFMN), or the like, but is not limited thereto. When a dianhydride containing a fluorine element is reacted with modified lithiophilic inorganic particles, an imide bond compound (F-PI) containing a fluorine element may be formed. For example, when the dianhydride is 4,4'-(hexafluoroisopropylidene)diphthalic anhydride (6FDA), the imide bond compound (F-PI) containing a fluorine element may include a compound represented by the following chemical formula 2.

[Chemical Formula 2]

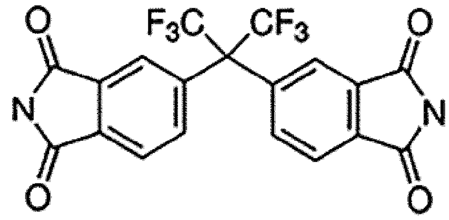

In this way, when applying a dianhydride containing a fluorine element, an imide bond compound (F-PI) containing a fluorine element may be formed within the protective layer (20), and the fluorine element reacts with lithium

ions to form LiF within the protective layer (20), thereby further improving the uniform electrodeposition characteristics of lithium metal during battery charging/discharging, and further improving the lifespan characteristics, electrochemical performance, ion conduction performance, and the like of the lithium metal anode (100).

In the operation of forming the imide bond, the heat treatment process may be performed in a vacuum, and the heat treatment time may be 0.5 to 3 hours, and the heat treatment temperature may be 100 to 300° C.

The method for manufacturing the lithium metal anode (100) includes an operation S3 of forming a protective layer (20) on at least one surface of the lithium metal layer (10) with a composition containing the polymer manufactured in the operation S2. Specifically, the operation S3 may be performed by a process of adding the polymer to an organic solvent such as tetrahydrofuran (THF) or the like and then stirring to prepare a composition; and a process of coating the composition on at least one surface of a lithium metal layer (10) and then drying the same.

In the process of preparing the composition, the content of the polymer in the composition may be 5 to 20 wt%. If the content of the polymer in the composition is too large, the viscosity may increase, which may cause problems in producing a protective layer with an appropriate thickness, and if it is too small, the concentration may be very low, which may cause problems in producing a uniform protective layer. Therefore, when the content of the polymer in the composition is appropriately adjusted within the above-described range, a uniform protective layer whose thickness may be controlled within an appropriate range may be produced. In addition, the stirring process during the preparation of the composition may be performed for 12 to 48 hours.

In the process of coating the composition on at least one surface of a lithium metal layer (10) and then drying the, the coating process may be performed by bar coating, casting, or the like, but is not limited thereto. In addition, the drying process may be performed at room temperature.

<u>**Lithium Metal Battery**</u>

A lithium metal battery according to an embodiment may include the lithium metal anode (100) described above. Specifically, the lithium metal battery may include the lithium metal anode (100) described above, a cathode, and an electrolyte layer positioned between the anode and the cathode.

The cathode is not particularly limited, and may include, as a cathode active material, a lithium-transition metal oxide such as lithium cobalt oxide ($LiCoO_2$), lithium manganese oxide ($LiMn_2O_4$), lithium nickel oxide ($LiNiO_2$), or the like, or a lithium-transition metal composite oxide in which some of these transition metals are substituted with another transition metal. Specifically, the lithium-transition metal composite oxide may be an NCM-based cathode active material represented by a chemical formula of $Li_xNi_aCo_bMn_cAl_dO_y$ ($0<x\leq1.1$, $2\leq y\leq2.02$, $0<a<1$, $0<b<1$, $0<c<1$, $0<d<1$, $0<a+b+c+d\leq1$). In addition, the cathode active material may be a lithium iron phosphate (LFP)-based cathode active material represented by a chemical formula of $LiFePO_4$. In addition, the cathode may be (1) a cathode for a lithium-sulfur battery using lithium polysulfide or the like including a sulfur (S) element as an active material, or (2) a cathode for a lithium-air battery using oxygen ($O_2$) in the air as an active material.

The electrolyte included in the electrolyte layer is not particularly limited, and may include at least one of a typical liquid electrolyte and a solid electrolyte. For example, the liquid electrolyte may include a lithium salt such as $LiPF_6$, LiTFSI(Lithium-(bis)-trifluoromethanesulfonimide) or the like; and an organic solvent such as an ether solvent, a carbonate solvent or the like. In addition, the solid electrolyte may include an oxide-based solid electrolyte such as $Li_7La_3Zr_2O_{12}$(LLZO) or the like; a sulfide-based solid electrolyte such as $Li_2S$-$P_2S_5$ or the like; or a polymer-based solid electrolyte such as (1) a solid polymer electrolyte formed by adding a polymer resin such as a polyether-based polymer or the like to a lithium salt, (2) a polymer gel electrolyte or the like in which an organic electrolyte containing an organic solvent and a lithium salt is impregnated into a polymer resin.

When the lithium metal battery includes the lithium metal anode (100) described above, the growth of lithium dendrites may be effectively suppressed by a protective layer (20) capable of inducing uniform lithium electrodeposition behavior, so that the cycle lifespan, capacity characteristics, safety, and the like may all be excellent during charging/-discharging.

Mode for Invention

**Example**

1. Lithium Metal Anode

<u>1) Anode Manufacturing</u>

(1) Example 1

A) Modification of Lithiophilic Inorganic Particles

2-aminoethanethiol, a compound having a thiol group and an amino group, was dispersed in a tetrahydrofuran (THF) solvent at 10 mol/L to prepare an organic solution, and 3 g of silver nanoparticles (AgNPs; Sigma-Aldrich), which are lithiophilic inorganic particles having a diameter of less than 150 nm, were dispersed in 4.5 mL of the organic solution, and then stirred for 2 hours to form a solid. Thereafter, the solid was washed with a tetrahydrofuran (THF) solvent and filtered, and the final filtrate was dried at room temperature for 24 hours to prepare silver nanoparticles ($Ag-NH_2$) having an amino group on the surface.

B) Preparation of Composition

4.44 g of dianhydride (6FDA; 4,4'-(hexafluoroisopropylidene)diphthalic anhydride) containing fluorine (F) was added to the solution in which 0.04 g of the prepared silver nanoparticles were added to 18 g of diethylformamide (DEF), and then stirred at room temperature for 18 hours to prepare a polyamic acid solution containing silver nanoparticles. At this time, the weight ratio of the silver nanoparticles and dianhydride (6FDA) in the solution was 1:100, and the content of the solid content in the solution was 20 wt%.

Afterwards, the solution was heat-treated at 200°C in a vacuum for 1 hour for the imidization reaction to prepare a polymer (F-Ag-PI) containing silver nanoparticles and having imide bonds, and it was added to a tetrahydrofuran (THF) solvent so that the content of the polymer was 10 wt% based on the total content of the composition, and stirred for 24 hours to prepare a composition containing a polymer containing silver nanoparticles and having imide bonds.

C) Formation of Protective Layer

The composition was coated by casting on the surface of a lithium metal layer having a thickness of 100 μm, and then dried at room temperature to prepare a lithium metal anode of Example 1 in which a protective layer was formed on one surface of the lithium metal layer.

(2) Example 2

The lithium metal anode of Example 2 was prepared in the same manner as Example 1, except that the heat treatment temperature for the imidization reaction was applied at 120°C.

(3) Comparative Examples 1 to 3

A) Comparative Example 1

The lithium metal anode of Comparative Example 1 was prepared in the same manner as in Example 1, except that an organic solution prepared by dispersing 2-aminoethanethiol in a tetrahydrofuran (THF) solvent at 0.01 mol/L was applied.

B) Comparative Example 2

4.44 g of dianhydride (6FDA; 4,4'-(hexafluoroisopropylidene)diphthalic anhydride) was added to the solution in which 3.36 g of diamine (2,2'-bis(trifluoromethyl)benzidine; TFDB) was added to 31 g of diethylformamide (DEF), and then stirred at room temperature for 18 hours to prepare a polyamic acid solution that does not contain silver nanoparticles, unlike Example 1. At this time, the molar ratio of diamine (TFDB) and dianhydride (6FDA) was 1.05:1, and the content of solid in the solution was 20 wt%.

Subsequently, the solution was heat-treated at 200°C and in a vacuum for 1 hour for the imidization reaction to prepare a polymer (F-PI) having an imide bond, and was added to tetrahydrofuran (THF) solvent so that the polymer content was 10 wt%, and stirred for 24 hours to prepare a composition including a polymer having an imide bond but not including silver nanoparticles. The composition was coated on the surface of a lithium metal layer having a thickness of 100 μm, and then dried at room temperature to prepare a lithium metal anode of Comparative Example 2 in which a protective layer was formed on one surface of the lithium metal layer.

C) Comparative Example 3

A lithium metal anode of Comparative Example 3 in which a separate protective layer was not formed on one surface of the lithium metal layer was prepared.

2) Anode Material Analysis (FT-IR)

As for the protective layer included in the anode samples of Examples 1 to 2 and Comparative Example 1 manufactured as described above, a Fourier transform infrared (FT-IR) spectrometer (Thermo Scientific; Nicolet 6700) was used to perform a material analysis using the Resolution Pro S/W program, and then the results are illustrated in FIGS. 4A to 4C.

Specifically, (1) the measurement mode was selected as the Attenuated Total Reflection (ATR) mode, (2) the Instrument Configuration conditions were set as IR Source: [MIR Source], Beam Splitter: [KBr], Beam Path: [Internal], Detector: [DTGS], Aperture/Source: [Open], and the like, (3) the conditions of method settings were set as Resolution: [8 $cm^{-1}$], No. of Scan: [16 scans], Scan Range: [4000 to 650 $cm^{-1}$], Speed: [5 kHz], Sampling Interval: [2], and the like, (4) the background spectrum was measured, and (5) the sample was loaded onto the ATR crystal and then the FT-IR spectrum was measured.

In addition, the area of the peak area was calculated by measuring the infrared absorption rate in the wavenumber domain where the peak appears by the FT-IR device and thus integrating the area of each peak. Specifically, the calculation was performed for the region from 1500 to 2000 $cm^{-1}$ using the OriginPro 2021b program. The baseline was derived using the 2nd derivative method, and each peak may be calculated by integrating the area derived by fitting with a Gaussian curve. Based on the area of each peak calculated as described above, the peak area ratio value and the imide peak area ratio value were calculated according to Formulas 1 and 2 below.

[Formula 1]

$$R_P = I/A$$

In the above formula 1, $R_P$ is the peak area ratio, A is the area of the peak area appearing in the region of 1680 to 1750 $cm^{-1}$, and I is the total area of each peak area appearing in the region of 1750 to 1800 $cm^{-1}$ and the region of 1820 to 1880 $cm^{-1}$.

[Formula 2]

$$R_I = I_1/I_2$$

In the above formula 2, $R_I$ is the imide peak area ratio, $I_1$ is the area of the peak area appearing in the region of 1750 to 1800 $cm^{-1}$, and $I_2$ is the area of the peak area appearing in the region of 1820 to 1880 $cm^{-1}$.

## 2. Lithium Metal Battery

1) Battery Manufacturing

A lithium metal battery sample including the lithium metal anode manufactured as described above was manufactured. At this time, the lithium metal battery sample used lithium metal as a working electrode and a counter electrode, and as a symmetric cell in which these electrodes were disposed on both sides, the battery sample including ethylene carbonate (EC)/ethyl methyl carbonate (EMC) (3:7 v/v) containing 1M $LiPF_6$ and 2 wt% fluoroethylene carbonate (FEC) as the electrolyte between the two electrodes was manufactured.

2) Battery Evaluation (Lifespan Characteristics)

Among the samples manufactured as described above, the overpotential characteristics according to lithium electrodeposition/stripping were evaluated for the lithium metal symmetric batteries of Example 1 and Comparative Examples 1 to 3. Specifically, the lithium metal battery sample was evaluated under the conditions of a capacity per area of 2 mAh and a current density per area of 1 mA at 25°C, and the overpotential of the battery generated during lithium oxidation/reduction was measured.

Referring to FIGS. 4A to 4C, in the case of Examples 1 and 2 using an organic solution prepared by dispersing 2-aminoethanethiol in a tetrahydrofuran (THF) solvent at 10 mol/L, FT-IR analysis represented two peaks in the Imide C=O peak area of 1750 to 1880 $cm^{-1}$, specifically, one peak in the region of 1750 to 1800 $cm^{-1}$ and one peak in the region of 1820 to 1880 $cm^{-1}$ (FIG. 4A). In addition, the peak area ratio value according to the above formula 1 in the FT-IR analysis for the protective layer was found to be greater than 1 for both Examples 1 and 2 (Example 1: 9.44, Example 2: 5.97), and the imide peak area ratio value according to the above formula 2 was also found to be greater than 1 for both Examples 1 and 2 (Example 1: 2.57, Example 2: 2.60) (FIGS. 4B and 4C).

On the other hand, in Comparative Example 1 using an organic solution prepared by dispersing 2-aminoethanethiol in tetrahydrofuran (THF) solvent at 0.01 mol/L, one peak appeared in the Acid C=O peak area of 1680 to 1750 $cm^{-1}$ during FT-IR analysis, and no peak appeared in the Imide C=O peak area of 1750 to 1880 $cm^{-1}$ (FIG. 4A). This is because the silver nanoparticles of Examples 1 and 2, which were modified with an organic solution containing 10 mol/L of 2-aminoethanethiol, easily formed amino groups on the surfaces thereof, and the particles were connected to each other by imide bonds, whereas the silver nanoparticles of Comparative Example 1, which were modified with an organic solution containing a relatively small amount (0.01 mol/L) of 2-aminoethanethiol, did not easily form amino groups on the surfaces thereof, and the particles were not connected to each other by imide bonds, and the added dianhydride was decomposed without being used for the imidization reaction, forming an acid.

Referring to FIG. 5, in FT-IR analysis, unlike Example 1, in the case of the lithium metal battery including the anodes of Comparative Example 1, which included a protective layer that did not have a peak in the Imide C=O peak area, Comparative Example 2, which did not include silver nanoparticles, and Comparative Example 3, which did not include a protective layer, it was found that the overpotential appeared relatively large from a specific point after a certain number of electrodeposition/stripping cycles. Specifically, Comparative Example 1 showed a large overpotential after 71 electrodeposition/stripping cycles (284 hours), while Comparative Examples 2 and 3 started to show overpotential from the beginning of the electrodeposition/stripping cycle. In Comparative Example 2, the voltage was at the level of several mV after 66 electrodeposition/stripping cycles (284 hours), and in Comparative Example 3, after 99 electrodeposition/stripping cycles (395 hours). It is determined that this is because when the lithium metal layer includes (1) an improperly formed protective layer due to improperly forming an imide bond, or (2) an improperly formed protective layer due to not including silver nanoparticles, or (3) an anode that does not include a protective layer, which are provided thereon, the growth of dendrites is not effectively suppressed during the battery electrodeposition/stripping process, resulting in excessive resistance inside the battery, and in case of long-term electrodeposition/stripping, the dendrites grow significantly, causing a short circuit inside the battery.

On the other hand, the battery of Example 1 including the anode with the protective layer appropriately formed on the lithium metal layer was illustrated to proceed with stable electrodeposition/stripping cycles without occurrence of large overpotential even after long-term charge/discharge cycles. It is determined that because, in the case of Example 1, the lithiophilic inorganic material (Ag) included in the protective layer induces uniform lithium electrodeposition behavior, thereby suppressing the growth of dendrites or the like, and exhibiting excellent mechanical strength of the protective layer due to the large amount of LiF or the like included in the protective layer.

Therefore, when a protective layer including 1) lithiophilic inorganic particles, 2) imide bonds, and the like is appropriately formed on at least one surface of the lithium metal layer, it is determined that the electrochemical performance of the lithium metal anode and the lithium metal battery including the same may be improved, thereby effectively enhancing efficiency and safety thereof.

Although the embodiments of the present disclosure have been described in detail above, the scope is not limited thereto, and it will be apparent to those skilled in the art that various modifications and variations are possible within a scope that does not depart from the technical spirit of the present disclosure described in the claims.

Description of Reference Characters

1: LITHIOPHILIC INORGANIC PARTICLES
10: LITHIUM METAL LAYER
20: PROTECTIVE LAYER
100: LITHIUM METAL ANODE
PI: IMIDE BOND COMPOUND
I: Imide C=O PEAK AREA
A: Acid C=O PEAK AREA

Industrial Applicability

As described above, the features of the present disclosure may be applied in whole or in part to a lithium metal anode, a method for manufacturing the same, and a lithium metal battery including the same.

## Claims

**1.** A lithium metal anode comprising:

a lithium metal layer; and a protective layer formed on at least one surface of the lithium metal layer, wherein the protective layer includes lithiophilic inorganic particles, and at least one peak appears in a region of 1750 to 1880 $cm^{-1}$ when analyzing the protective layer using FT-IR.

**2.** The lithium metal anode of claim 1, wherein the protective layer includes an organic/inorganic composite polymer, wherein the organic/inorganic composite polymer has a structure in which chemical bonds are formed between lithiophilic inorganic particles and are three-dimensionally connected to each other.

**3.** The lithium metal anode of claim 1, wherein during FT-IR analysis of the protective layer, at least one peak respectively appears in the region of 1750 to 1800 $cm^{-1}$ and a region of 1820 to 1880 $cm^{-1}$.

**4.** The lithium metal anode of claim 3, wherein a peak area ratio value according to the following formula 1 is greater than 1 during the FT-IR analysis of the protective layer,

[Formula 1]

$$R_P = I/A,$$

where $R_P$ is a peak area ratio, A is an area of a peak area appearing in a region of 1680 to 1750 $cm^{-1}$, and I is a total area of each peak area appearing in the region of 1750 to 1800 $cm^{-1}$ and the region of 1820 to 1880 $cm^{-1}$.

**5.** The lithium metal anode of claim 1, wherein the protective layer includes at least one of LiF and $Li_3N$.

**6.** The lithium metal anode of claim 1, wherein the lithiophilic inorganic particles include a metal, a metal oxide, a metal nitride, or combinations thereof.

**7.** The lithium metal anode of claim 1, wherein the lithiophilic inorganic particles include Au, Ag, Pt, Al, Mg, Zn, Ni, Se, Te, Bi, Pb, Ga, Cd, Hg, Pd, Sc, Y, Ca, Sr, Ba, NiO, ZnO, SnO, $Cu_xO$(where x is 1 or 2), GeO, $Ag_xO$(where x is 1 or 2), $Sb_2O_y$ (where y is 3, 4 or 5), CuZn or combinations thereof.

**8.** The lithium metal anode of claim 1, wherein a diameter of the lithiophilic inorganic particles is less than 500 nm.

**9.** The lithium metal anode of claim 1, wherein a thickness of the protective layer is 0.1 to 20 μm.

**10.** A method for manufacturing a lithium metal anode, comprising:

an operation S1 of modifying lithiophilic inorganic particles to have amino groups on surfaces thereof;
an operation S2 of producing an organic/inorganic composite polymer by imidizing the modified lithiophilic inorganic particles and dianhydride; and
an operation S3 of forming a protective layer on at least one surface of a lithium metal layer with a composition including the organic/inorganic composite polymer.

**11.** The method for manufacturing a lithium metal anode of claim 10, wherein the operation S1 includes a process of dispersing lithiophilic inorganic particles in an organic solution,

wherein the organic solution includes a compound represented by the following chemical formula 1,

[Chemical Formula 1] $H_2N - R^1 - SH$,

where $R^1$ is at least one organic group selected from an alkylene group, an arylene group, a heterocyclic group, and an alkylene oxide group, able to be substituted.

**12.** The method for manufacturing a lithium metal anode of claim 11, wherein the organic solution includes 1 to 20 mol/L of the compound represented by chemical formula 1.

**13.** The method for manufacturing a lithium metal anode of claim 10, wherein the dianhydride includes a fluorine element.

**14.** A lithium metal battery comprising the lithium metal anode according to any one of claims 1 to 9.

[FIG.1a]

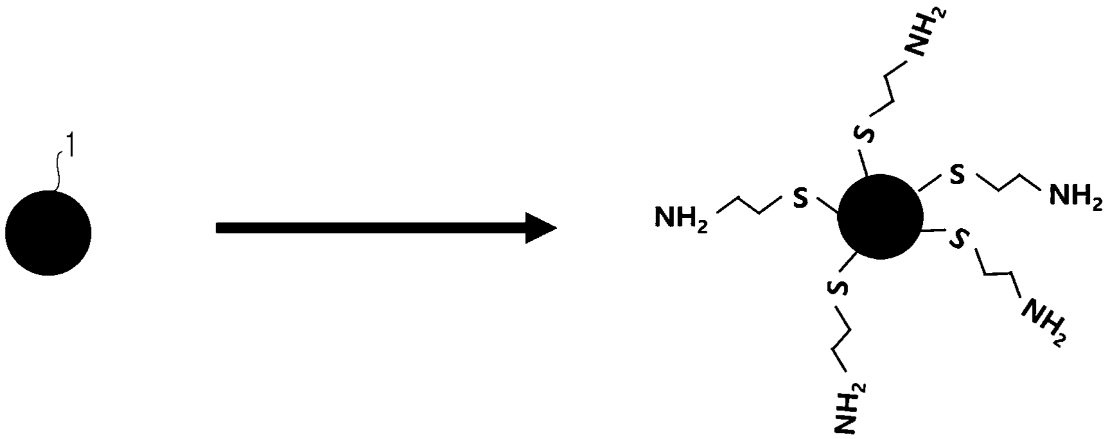

[FIG.1b]

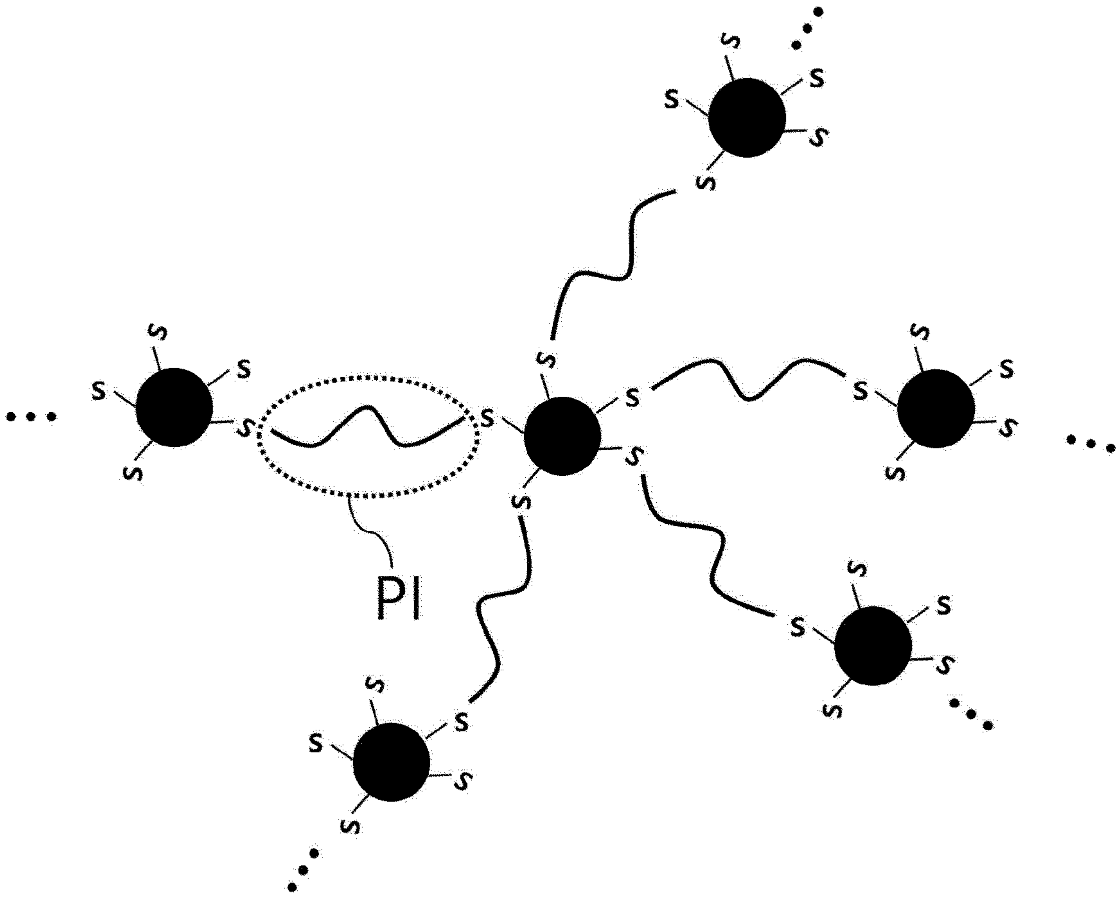

[FIG.2]

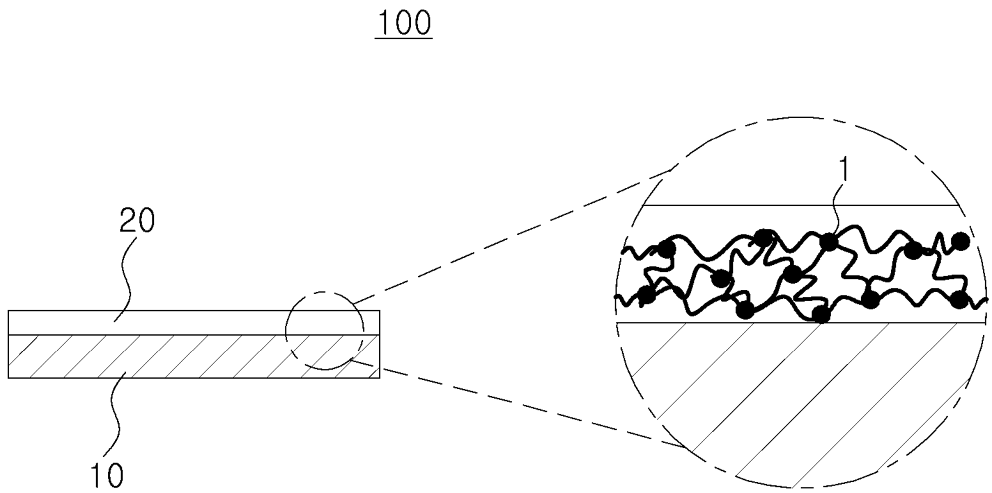
100
1
20
10

[FIG.3]

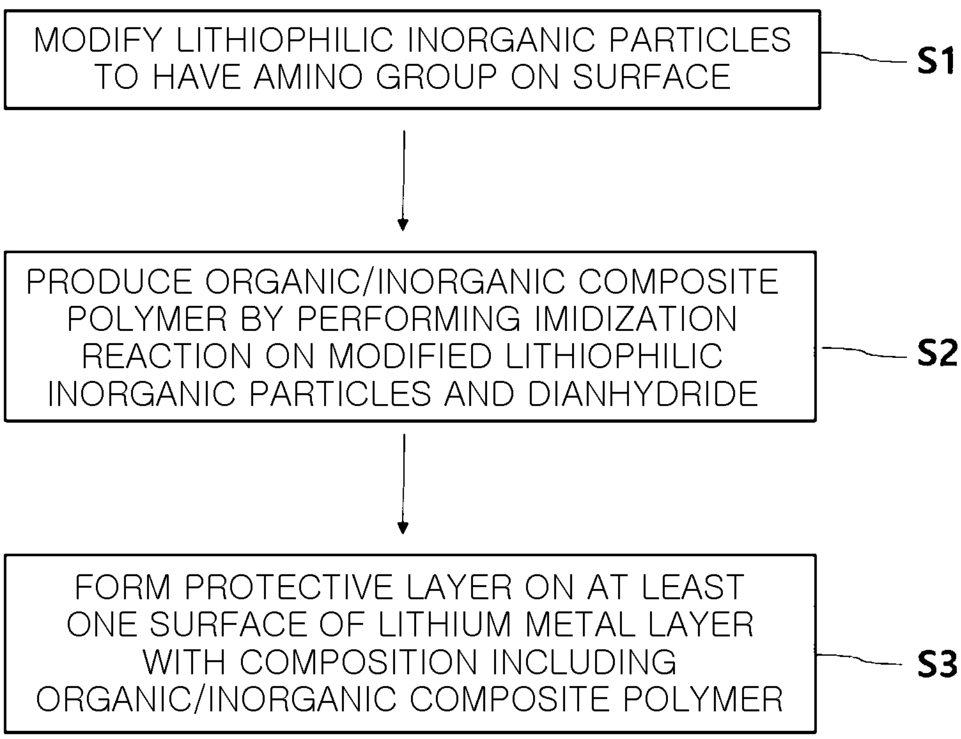
MODIFY LITHIOPHILIC INORGANIC PARTICLES TO HAVE AMINO GROUP ON SURFACE
S1
PRODUCE ORGANIC/INORGANIC COMPOSITE POLYMER BY PERFORMING IMIDIZATION REACTION ON MODIFIED LITHIOPHILIC INORGANIC PARTICLES AND DIANHYDRIDE
S2
FORM PROTECTIVE LAYER ON AT LEAST ONE SURFACE OF LITHIUM METAL LAYER WITH COMPOSITION INCLUDING ORGANIC/INORGANIC COMPOSITE POLYMER
S3

[FIG.4a]

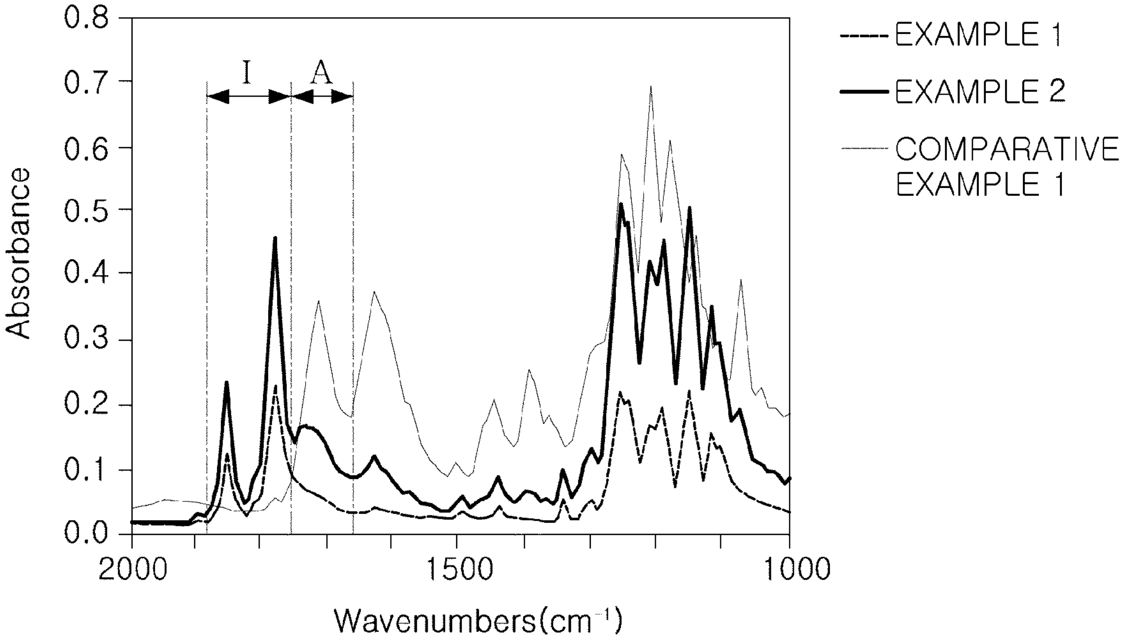
0.8
0.7
0.6
0.5
0.4
0.3
0.2
0.1
0.0
Absorbance
I
A
2000
1500
1000
Wavenumbers(cm-1)
EXAMPLE 1
EXAMPLE 2
COMPARATIVE EXAMPLE 1

[FIG.4b]

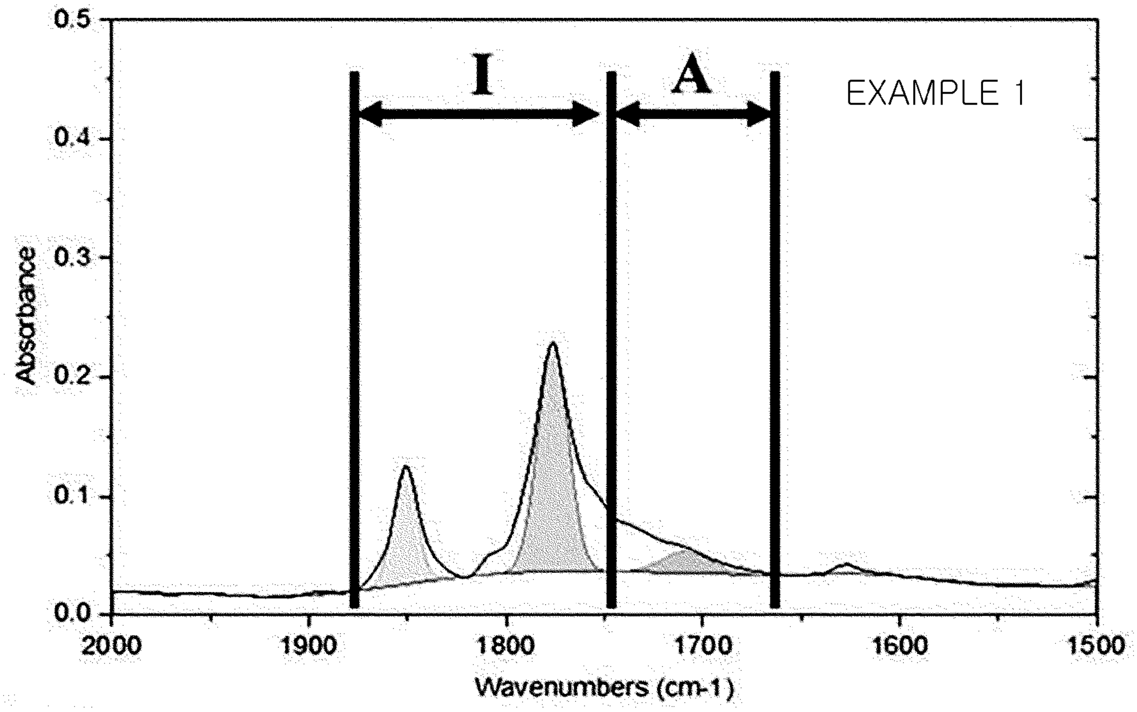
0.5
0.4
0.3
0.2
0.1
0.0
Absorbance
I
A
EXAMPLE 1
2000
1900
1800
1700
1600
1500
Wavenumbers (cm-1)

[FIG.4c]

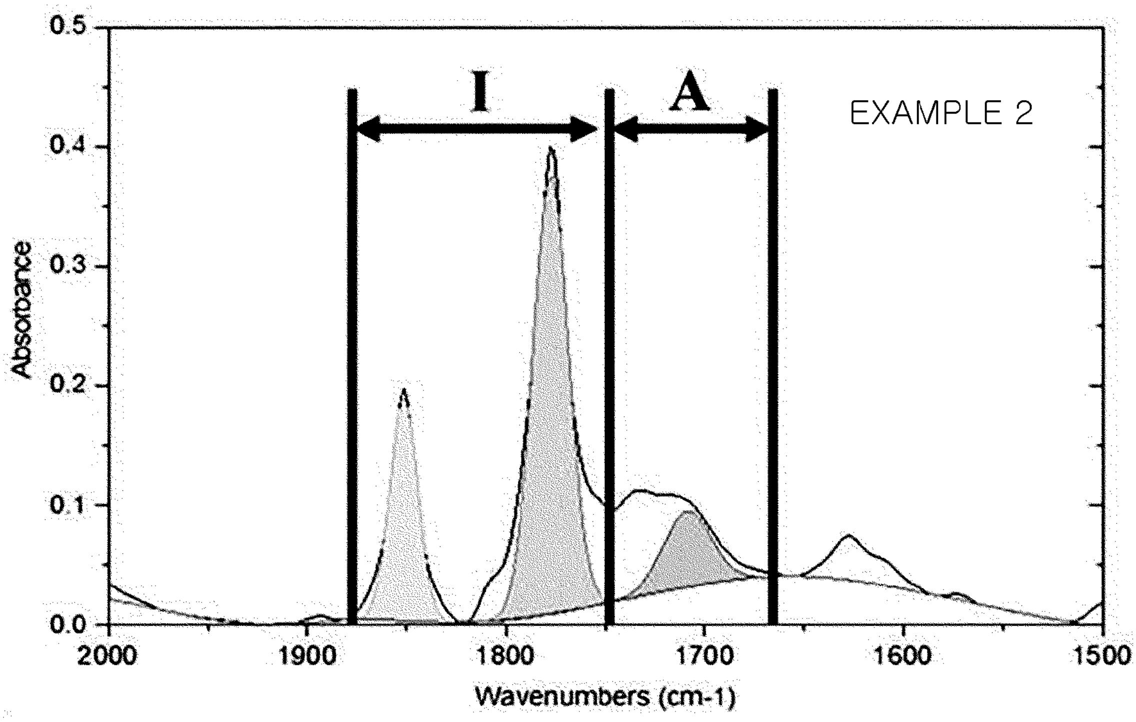
I
A
EXAMPLE 2
Absorbance
0.5
0.4
0.3
0.2
0.1
0.0
2000
1900
1800
1700
1600
1500
Wavenumbers (cm-1)

[FIG.5]

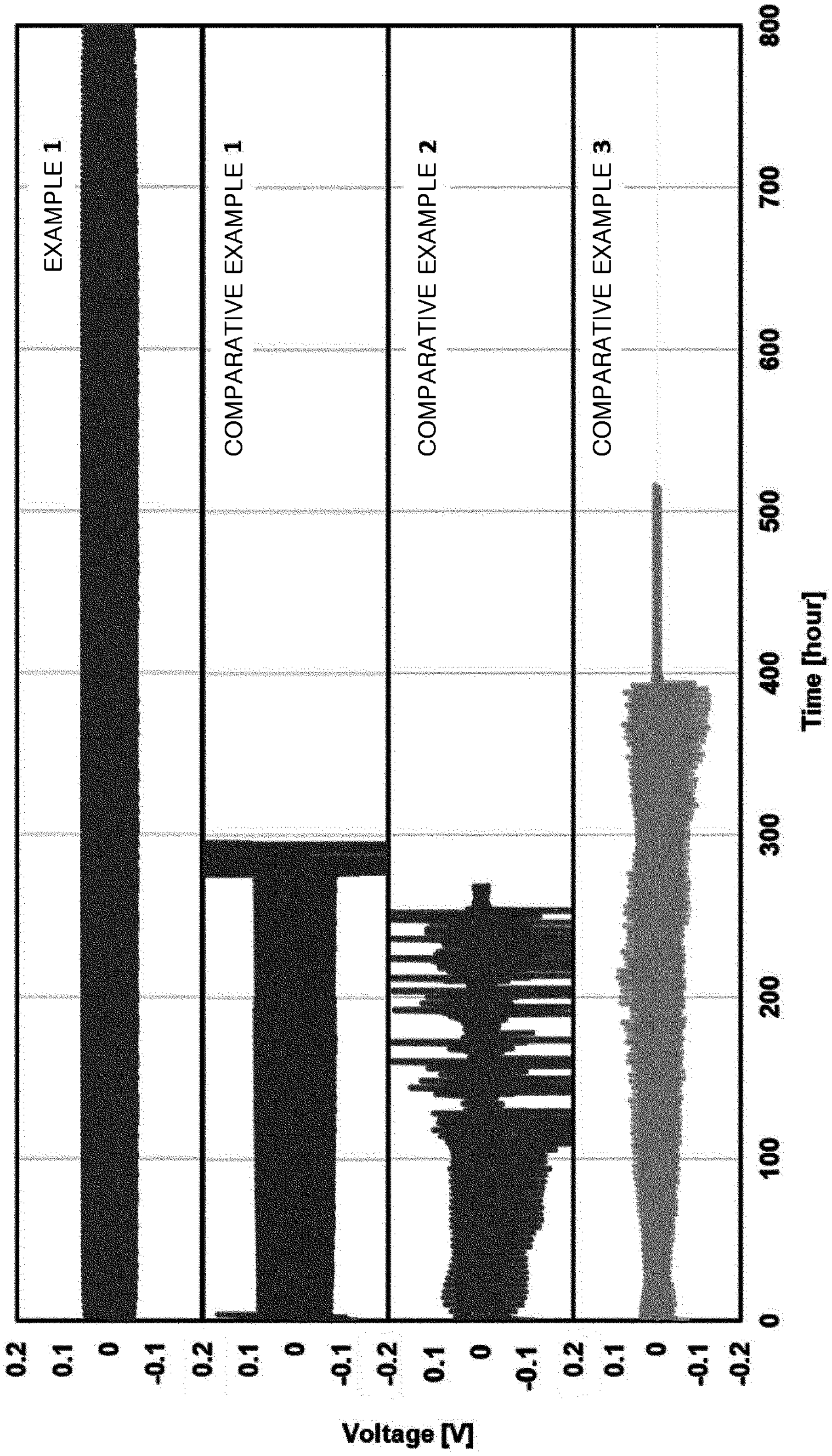
EXAMPLE 1
COMPARATIVE EXAMPLE 1
COMPARATIVE EXAMPLE 2
COMPARATIVE EXAMPLE 3
0.2
0.1
0
-0.1
-0.2
Voltage [V]
0
100
200
300
400
500
600
700
800
Time [hour]

## INTERNATIONAL SEARCH REPORT

International application No.
**PCT/KR2023/013384**

**A. CLASSIFICATION OF SUBJECT MATTER**

**H01M 4/134**(2010.01)i; **H01M 4/62**(2006.01)i; **H01M 4/1395**(2010.01)i; **H01M 10/42**(2006.01)i; **H01M 10/052**(2010.01)i; **H01M 4/38**(2006.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/134(2010.01); H01M 10/052(2010.01); H01M 10/0567(2010.01); H01M 4/13(2010.01); H01M 4/139(2010.01); H01M 4/60(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 금속 (Li metal), 음극 (anode), 가교 결합 (crosslink bonding), 개질 (modification), 무기입자 (inorganic particle), 디안하이드라이드 (dianhydride), 이미드화 (imidization)

**C. DOCUMENTS CONSIDERED TO BE RELEVANT**

| Category* | Citation of document, with indication, where appropriate, of the relevant passages | Relevant to claim No. |
|---|---|---|
| A | KR 10-2020-0107835 A (LG CHEM, LTD. et al.) 16 September 2020 (2020-09-16) See abstract; and claim 1. | 1-14 |
| A | KR 10-2017-0036211 A (LG CHEM, LTD.) 03 April 2017 (2017-04-03) See abstract; paragraph [0034]; and claim 1. | 1-14 |
| A | KR 10-2018-0121391 A (SAMSUNG ELECTRONICS CO., LTD. et al.) 07 November 2018 (2018-11-07) See entire document. | 1-14 |
| A | KR 10-2015-0145046 A (KOREA ADVANCED INSTITUTE OF SCIENCE AND TECHNOLOGY) 29 December 2015 (2015-12-29) See entire document. | 1-14 |
| A | JP 2012-142297 A (UBE IND., LTD.) 26 July 2012 (2012-07-26) See entire document. | 1-14 |

☐ Further documents are listed in the continuation of Box C.  ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **15 December 2023** | **18 December 2023** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.
**PCT/KR2023/013384**

| Patent document cited in search report | Publication date (day/month/year) | Patent family member(s) | Publication date (day/month/year) |
|---|---|---|---|
| KR 10-2020-0107835 A | 16 September 2020 | CN 112335077 A | 05 February 2021 |
| | | EP 3809496 A1 | 21 April 2021 |
| | | JP 2021-530855 A | 11 November 2021 |
| | | JP 7213970 B2 | 27 January 2023 |
| | | KR 10-2488680 B1 | 17 January 2023 |
| | | US 2021-0273217 A1 | 02 September 2021 |
| | | WO 2020-184900 A1 | 17 September 2020 |
| KR 10-2017-0036211 A | 03 April 2017 | KR 10-1984718 B1 | 31 May 2019 |
| KR 10-2018-0121391 A | 07 November 2018 | CN 108807851 A | 13 November 2018 |
| | | CN 108807851 B | 07 July 2023 |
| | | EP 3396736 A1 | 31 October 2018 |
| | | EP 3396736 B1 | 23 September 2020 |
| | | US 10971753 B2 | 06 April 2021 |
| | | US 2018-0316051 A1 | 01 November 2018 |
| KR 10-2015-0145046 A | 29 December 2015 | KR 10-1614885 B1 | 22 April 2016 |
| JP 2012-142297 A | 26 July 2012 | AT E310321 T1 | 15 December 2005 |
| | | AU 6242496 A | 30 January 1997 |
| | | CN 1133221 C | 31 December 2003 |
| | | CN 1189247 A | 29 July 1998 |
| | | DE 69635450 T2 | 03 August 2006 |
| | | EP 0836238 A1 | 15 April 1998 |
| | | EP 0836238 B1 | 16 November 2005 |
| | | JP 2008-103344 A | 01 May 2008 |
| | | JP 2008-103345 A | 01 May 2008 |
| | | JP 4253853 B2 | 15 April 2009 |
| | | JP 5071055 B2 | 14 November 2012 |
| | | JP 5071056 B2 | 14 November 2012 |
| | | JP 5158273 B2 | 06 March 2013 |
| | | US 2002-0114993 A1 | 22 August 2002 |
| | | US 6365299 B1 | 02 April 2002 |
| | | US 7105251 B2 | 12 September 2006 |
| | | WO 1997-001870 A1 | 16 January 1997 |
| | | WO 97-01870 A1 | 16 January 1997 |

Form PCT/ISA/210 (patent family annex) (July 2022)